# EUROPEAN PATENT APPLICATION

(11) **EP 2 207 362 A1**
(43) Date of publication of application: **14.07.2010**
(21) Application number: 09150277.3
(22) Date of filing: 09.01.2009
(51) Int. Cl.: H04Q 1/14

(54) **Telecommunication assembly**

(71) Applicant: 3M Innovative Properties Company, St. Paul, MN 55133-1000 (US)
(72) Inventor: Metral, Guy, 74300 Cluses (FR); Chatellard, Xavier, 74300 Nancy sur Cluses (FR)
(74) Representative: Bergen, Katja

(57) **Abstract**

The invention relates to a telecommunication assembly 1 comprising, at least one termination module 2 having contacts for connecting wires and contacts for connecting electronic components and a carrier 3 for carrying the termination module, wherein the termination module is pivotally attached to the carrier and can be pivoted from a closed position relative to the carrier into an open position. The telecommunication module 2 is attached to the carrier 3 over a pivot adapter7 and the pivot adapter 7 is detachably attached to the carrier 7. According to the invention at least two pivot adapters 7 of at least two of the termination modules 2 are fixed to each other. The invention further relates to a method for upgrading a telecommunication assembly.

## Description

### Technical Field

The invention relates to a telecommunication assembly with termination modules having electrical contacts for connecting wires and electrical contacts for connecting electronic components. The invention further relates to a method for upgrading a telecommunication assembly.

### Background Art

In the field of telecommunication, numerous customers are connected with the switch of a telecommunication company via telecommunication lines. The customers can also be called subscribers. The switch is also called an exchange. Between the subscriber and the switch, sections of telecommunication lines are connected by telecommunication assemblies with termination modules. The termination modules establish an electrical connection between a wire which is attached to the module at a first contact, another wire which is attached to the termination module at a second contact. Plural termination modules can be put together at a distribution point, such as a main distribution frame, an intermediate distribution frame, an outside cabinet or a distribution point located, for example in an office building or a particular floor of an office building.

To allow flexible wiring, some telecommunication lines are connected with first termination modules in a manner to constitute a permanent connection. Flexibility is realized by so called jumpers, which flexibly connect contacts of the first termination module with contacts of second termination modules. These jumpers can be changed when a person moves within an office building or with his home to provide different services (i.e. a different telephone line) with a certain telephone number, which the relocated person intends to keep.

ADSL-technology has spread widely in the field of telecommunication. This technology allows at least two different signals to be transmitted on a single line. This is achieved by transmitting the different signals at different frequencies along the same line. The signals are combined at a particular point in the telecommunication line and split at another point. In particular, at the subscriber side, voice and data signals, which are separate, are combined and sent to the central office via the same line. In the central office the combined signal is split. For the transmission of voice and data signals to the subscriber, separate voice and data signals are combined at the central office, sent to the subscriber and split at the subscriber side. After splitting the signal, the so-called POTS (plain old telephone service) can be used to transmit voice signals. The remaining part of the split signal can be used to transmit data, for example. Filters, so-called splitters, which are used to split or combine the signals, can generally be arranged at any distribution point. One possibility to arrange splitters is to connect them to termination modules with electrical contacts for connecting the wires that are used to transmit the different signals (voice, data and combined signal).

EP 0 766 482 A2 discloses a telecommunication assembly with termination modules having electrical contacts for connecting wires. The telecommunication assembly comprises wire guide means that are at least partially pivotally mounted.

US 2007/144 980 A1 discloses a telecommunication assembly with a frame like structure or rack for termination modules. At least one member of the frame like structure may be joined in a plurality of positions. Thereby this structure may be varied.

EP 0 743 706 A2 discloses a mounting frame assembly with a front receptacle flap including a plurality of receptacles for termination modules and a rear mounting plate. The front receptacle flap and the rear mounting plate are coupled with each other over a hinge element thereby providing the possibility of an access to the rear side of the termination modules.

EP 1 750 461 A1 discloses a telecommunication assembly with a carrier and a double-sided termination modules, wherein the termination modules are pivotally connected with the carrier. The termination modules provide electrical contacts for connecting wires and electrical contacts for connecting electronic components. The carrier has a substantially L-shaped cross-section with a leg portion and a bottom portion. The termination modules comprise an extension opposite the leg portion of the carrier, which comprises means for fixing the extension to the bottom portion of the carrier. When the means for fixing are released the termination modules including the extension can be pivoted about a pivot axis thereby providing access to the rear side of the termination modules.

There is a need for a telecommunications assembly with termination modules having contacts for connecting wires and contacts for connecting electronic components that can easily and therefore time and cost effective be updated or upgraded with, for example, new electronic components. In particular, there is a need for a telecommunications assembly that can easily be updated or upgraded without exchanging the termination modules and without rewiring the termination modules.

### Summary of the Invention

The present invention provides a telecommunication assembly comprising at least one termination module having electrical contacts for connecting wires and electrical contacts for connecting electronic components as well as a carrier for carrying the termination module. The termination module is pivotally attached to or pivotally mounted to the carrier and can be pivoted from a closed position relative to the carrier into an open position. The termination module of the telecommunication assembly is attached to the carrier over a pivot adapter and the pivot adapter is detachably attached t the carrier. According to the invention at least two pivot adapters of at least two termination modules are fixed at each other.

The assembly includes at least one termination module. The termination module may comprise several termination strips or connection strips. The strips may comprise a housing. The housing may be made out of plastic or any other suitable material allowing electrical insulation. The housing can be constituted by one or more components. The housing serves to accommodate contacts, to which telecommunication lines/wires or electronic components are connectable. The housing can also have specific structures for positioning the contacts therein. Moreover, the housing can comprise one or more cavities or receiving spaces, which are adapted to accommodate contacts and/or objects such as one or more electronic components or functional modules or parts thereof. Finally, the housing can comprise suitable structures, typically at the outside thereof, to enable the termination strips or modules to be mounted to a trough, a rack or any other suitable carrier in the field of telecommunications.

The carrier of the telecommunication assembly may be provided in the form of a trough. It may have a U-shaped cross section. It may also have a substantially L-shaped cross section. The carrier has a length, which allows plural termination modules to be mounted thereon. Moreover, the termination modules may be displaceable mounted, for example, slideable along the length of the carrier. If the carrier comprises a substantially L-shaped cross section the termination modules may firstly be mounted to the leg or leg portion of the L cross section. Secondly the termination modules may include a second leg or an extension, opposite the leg or leg portion of the carrier, which connects the termination modules with the other leg or bottom portion of the L-shaped carrier, which thus acts as a bottom for the resulting assembly. This structure is very similar to an assembly in which termination modules are mounted to a trough-like carrier. The carrier is typically fixed together with a number of other carriers to a frame like structure. This structure provides a space rear of the termination modules to house electronic components, e.g. splitters, protection components or other components.

The carrier may comprise suitable structures for mounting termination modules on it, such as for example openings, projections, grooves or the like. Moreover, the carrier may include one or more profiled rails, which may, in the case of more than one rail, be arranged parallel to each other to allow the modules to be moved along the rails. The one or more rails may have a substantially circular cross-section and/or may be provided with one or more projections, recesses, undercuts or the like, in order to allow secure mounting of termination modules thereon. For this purpose, the termination modules may have as will be apparent to those skilled in the art, corresponding structures, such as latch hooks, projections or recesses.

The carrier may be made at least partially out of an electrically conductive material such as for example metal, to form part of a connection to ground. Such a connection can be required for a number of reasons. Firstly, termination modules may be provided with overvoltage protectors, such as surge arresters, which serve to divert overvoltage, for example, which might occur in the event of lightning, to ground. Secondly, telecommunications modules and/or wires connected therewith can comprise shielding in order to avoid crosstalk between adjacent lines. Any current, which is induced in any shielding components, needs to be diverted to ground. Moreover, electrostatic charging can occur which can be diverted to ground. Thus, for the above-mentioned purposes an electrical connection between the telecommunications module and ground is beneficial. It is also possible to make the carrier out of another suitable material, such as for example plastic, and to provide separate grounding elements.

According to the invention the termination module is pivotally attached to the carrier and can be pivoted from a closed position relative to the carrier into an open position. The termination module may provide contacts on its front side and on its rear side. The front side is the side of the termination module that - in a closed position of the termination module - faces away from the carrier. The rear side is the side that - in a closed position of the termination module - faces the carrier. In the closed position of the termination module, the contacts on the front side are accessible and in an open position of the termination module the contacts on the rear side are accessible. Such an assembly simplifies the installation of the inventive telecommunication assembly.

The termination module is attached to the carrier over a pivot adapter and the pivot adapter is detachably attached to the carrier. The pivot adapter may be a separate element that is arranged between the termination module and the carrier. The pivot adapter may provide a pivot axis that engages with a complementary hinge structure at the termination module, such as a bore and/or an eyelet, in order to allow the desired pivoting motion of the termination module relative to the carrier. Furthermore, the pivot adapter may be detachably fixed to the carrier, e.g. at the leg portion of the carrier by screws. With such an arrangement it is possible to easily detach the carrier from the termination module with the pivot adapter by unscrewing the screws without disconnecting the pivot axis from the hinge structure. All other suitable mechanical connections are possible as well such as for example interference fits or rivets. The pivot adapter may be secured over the carrier by means of screws, snap fits, ratchets or the like. At least two pivot adapters of at least two of the termination modules are fixed to each other. Attaching pivot adapters at each other has the advantage that several termination modules are also attached to each other and therefore stay together if - during an upgrade process - the termination modules are detached from the carrier. Another possibility is to fix all pivot adapters of all termination modules that belong to one carrier to each other. By keeping the termination modules together as one single block during the upgrade process, the modules do not have to be handled separately. The pivot adapters may be attached to each other e.g. by a dove tail structure, snap fit, ratchet or the like. I is also possible to attach the pivot adapters irreversibly with each other for example to glue them at each other.

An extension may be fixed at the termination module to be detachably attaché to the carrier in the closed position of the termination module. The extension and the carrier may be designed as replacement parts that may be at least partially exchanged by upgraded parts. Replacement parts are parts that can easily be replaced by other parts, e.g. upgraded parts, that means that they can easily be detached and another part can easily be reattached. Upgraded parts may for example be necessary in a situation where new electronic components need to be connected to the termination modules and the new electronic components have dimensions that do not fit into the actual assembly. For an easy replacement or upgrade process it is helpful when the replacement parts fulfil certain requirements. For example the replacement parts need to be detachably fixed to adjacent parts of the assembly to assure that they can be easily detached. Such easy detachable connections are for example snap fit connections or screwed connections or the like. Other possibilities of connections are interference fits or rivets, screws or bayonets. Furthermore it is helpful when the replacement parts are connected to a small number of parts and therefore only this small number of parts needs to be detached during the replacement or upgrade process. Providing the extension and the carrier as a replacement part may have the advantage of generating a newly dimensioned space at the rear side of the termination module, for example, between the carrier, the termination module and the extension.

According to one embodiment of the invention the extension is attached detachably to the termination module. During the replacement or upgrade process the extension may be detached from the termination module and afterwards a new extension, e.g. with adapted dimensions, may be attached to the termination module. One example for a detachable connection between the extension and the termination module is a snap fit connection. Any other suitable detachable connection is possible as well, such as for example screwed connections, ratchet systems or the like.

According to one embodiment of the invention the extension that is fixed at the termination module can comprise two parts or more. For example, the extension comprises an adapter part that is fixed at the termination module and an elongation part. The elongation part may be designed such that it can easily be replaced. Therefore the adapter part and the elongation part of the extension may be detachably connected with each other. During the replacement or upgrade process the elongation part may be detached from the adapter part and afterwards a new elongation part, e.g. with adapted dimensions, may be fixed at the adapter part. One example for a detachable connection between the adapter part and the elongation part is a snap fit connection. Any other suitable detachable connection is possible as well, such as for example a connection with a screw or ratchet or the like.

The telecommunication assembly according to the invention may provide wire guide means. Those wire guide means may be arranged at the outside of the assembly. Wire guide means are generally used for managing the wires coming from and leading to the electrical contacts on the termination modules. According to this embodiment of the invention the wire guide means are arranged at the outside of the telecommunication assembly thereby providing the possibility of easily accessing all wires. During an upgrade process it may be necessary to reconnect one or the other wire with an electrical contact of the termination module. Having all wires arranged outside of the assembly not only makes this action possible but also makes it easy to carry out.

It is also possible that the wire guide means are fixed at the pivot adapter of the termination module. By that all wires would be attached to a part of the assembly that is not going to be exchanged during the upgrade process. Therefore the wires can stay connected to the contacts and can also stay in their respective wire guide means during the whole process, saving time and expense in the upgrade process.

The invention also provides a method for upgrading a telecommunication assembly, the telecommunication assembly comprising: at least one termination module having contacts for connecting wires and contacts for connecting electrical components, a carrier for carrying the termination module, wherein the termination module is pivotally attached to the carrier and can be pivoted from a closed position relative to the carrier into an open position. The at least one termination module is attached to the carrier over a pivot adapter and the pivot adapter is detachably attached to the carrier. The method according to the invention comprises the steps of detaching the termination module from the carrier, replacing the carrier with an upgraded carrier and fixing the termination module to the upgraded carrier. This method is advantageous because it opens the possibility to upgrade the telecommunication assembly, that means to adapt the telecommunication assembly to new requirements, e.g. to adapt the dimensions of the telecommunication assembly to bigger dimensioned electronic parts that have to be attached to the rear side of the termination modules, without exchanging the termination modules and without rewiring the system.

According to another embodiment of the invention fixing the upgraded carrier is achieved by fixing an adapter to the original carrier, thereby elongating the leg portion of the carrier, and then fixing the carrier with the adapter to the termination module. This embodiment is advantageous because the carrier may stay attached to the frame like structure that it is attached to, saving one step in the upgrade process. It is also possible to replace the whole carrier with an upgraded carrier that has one longer leg. Fixing the upgraded carrier is then being achieved by fixing the upgraded carrier with a longer leg.

The invention also provides a method for upgrading a telecommunication assembly, the telecommunication assembly comprising: at least one termination module having contacts for connecting wires and contacts for connecting electrical components, a carrier for carrying the termination module, wherein the termination module is pivotally attached to the carrier and can be pivoted from a closed position relative to the carrier into an open position. The at least one termination module is attached to the carrier over a pivot adapter and the pivot adapter is detachably attached to the carrier. The termination module further comprises an extension that is detachably attached to the carrier in the closed position of the termination module. The method according to the invention comprises the steps of detaching the extension at least partially from the termination module, replacing the extension or parts of the extension with an upgraded extension or an upgraded extension part and fixing the upgraded extension or the upgraded extension part to the termination module.

According to a further embodiment of the invention fixing the upgraded extension is achieved by fixing a longer version of the extension. This method is advantageous because replacing the existing extension by a longer version of an extension is an easy operation.

According to yet another embodiment of the invention fixing the upgraded extension part is achieved by fixing a longer version of the extension part. To replace the existing extension part by a longer extension part is an easy operation. The adapter part can stay at the termination module in this case. One advantage may be that the connection between the adapter part and the elongation part may be designed so that is easy to open.

### Brief Description of the Drawings

The invention will now be described in more detail with reference to the following Figures exemplifying particular embodiments of the invention:
- Fig. 1: shows a three dimensional view of the telecommunication assembly according to the invention with a carrier and termination modules, wherein the termination modules are shown in a closed position relative to the carrier;
- Fig. 2: shows an isometric view of the disassembled telecommunication assembly of Fig. 1 in an open position;
- Fig.3: shows an exploded isometric view of the disassembled telecommunication assembly according to the invention in an open position with replacement parts;
- Fig.4: shows an exploded isometric view of the disassembled telecommunication assembly according to the invention in an open position with another embodiment of replacement parts;
- Fig. 5: shows a three dimensional view of the disassembled telecommunication assembly according to the invention in an open position with the replacement parts shown in Fig. 4;
- Fig. 6: shows a three dimensional view of pivot adapters according to the invention in an disassembled stage;
- Fig. 7: shows a three dimensional view of the pivot adapters of Fig. 4 in an assembled stage;
- Fig. 8: shows a detailed view of a dovetail structure of the pivot adapters of Fig. 6 and 7;
- Fig. 9: shows the telecommunication assembly with the pivot adapter and wires from the outside of the assembly in a closed position and
- Fig. 10: shows the telecommunication assembly with the pivot adapter and wires from the inside of the assembly in an open position.

### Description of Embodiments

Herein below various embodiments of the present invention are described and shown in the drawings wherein like elements are provided with the same reference numbers.

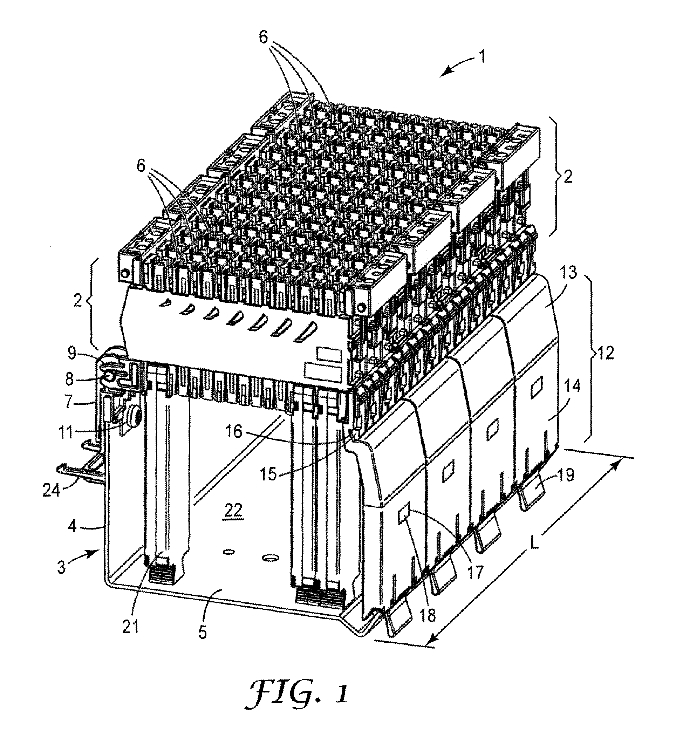

Fig. 1 shows a telecommunication assembly 1 with termination modules 2 that are mounted to a carrier 3. In Fig. 1 the termination modules 2 are shown in a closed position relative to the carrier 3. The termination modules 2 have, at a front side thereof, one or more rows of contacts for connecting wires and/or electronic components, of which details are not shown in Fig. 1. The termination modules 2 also have, at a rear side thereof, one or more rows of electrical contacts for connecting wires and/or electronic components. In the closed position of the termination modules 2 shown in Fig. 1 the electrical contacts at the front side are accessible. In an open position of the termination modules 2 the electrical contacts at the rear side are accessible.

The termination modules 2 are mounted to the carrier 3 at their rear side. The carrier 3 has a substantially L-shaped cross-section with a leg portion 4 and a bottom portion 5. The carrier 3 has a length L so that a plurality of termination modules 2 - in this embodiment four modules 2, each with three termination strips 6 - can be mounted thereto. The termination modules 2 are attached to the leg portion 4 over a pivot adapter 7. The pivot adapter 7 provides a pivot axis 8 that engages with a complementary hinge structure 9 disposed on the rear side of the termination modules 2, such as a bore and/or an eyelet, in order to allow the desired pivoting motion of the termination modules 2 relative to the carrier 3. Furthermore, the pivot adapter 7 is detachably fixed at the leg portion 4 of the carrier 3 by a mechanical fastener such as screws 11.

The termination modules 2 each comprise an extension 12 for securing the termination modules in their closed position at the carrier 3. The extensions 12 comprise two parts: an adapter part 13 and an elongation part 14. The adapter parts 13 are attached to the termination modules 2 by the interaction of projections 15 provided on the termination modules 2, in particular a housing part thereof, and an undercut 16 provided on the adapter part 13 of the extension 12. The elongation parts 14 and the adapter parts 13 are connected with each other via snap fit wherein the elongation part 14 provides an opening 17 and the adapter part 13 a snap arm 18 cooperating with that opening 17. The elongation parts 14 further provide a latch hook 19, which can be inserted into an opening (not shown) in the bottom portion 5 of the carrier 3 thereby fixing or securing the termination modules 2 in their closed position at the carrier 3. Each termination module 2 comprises one extension 12. Thereby, it is possible to bring each termination module 2 separately into an open position without swivelling other adjacent termination modules 2 of the telecommunication assembly 1. In their open position the rear sides of the termination modules 2 are accessible. That makes it possible to insert electronic components, such as for example splitter modules 21 or other electronic components such as protection modules into the termination modules 2. It is also possible to connect wires to the electrical contacts located at the rear side of the termination modules 2. As can be seen in Fig. 1, the splitter modules 21 have a length that fits into the space 22 surrounded by the carrier 3, the termination modules 2 and the extension 12.

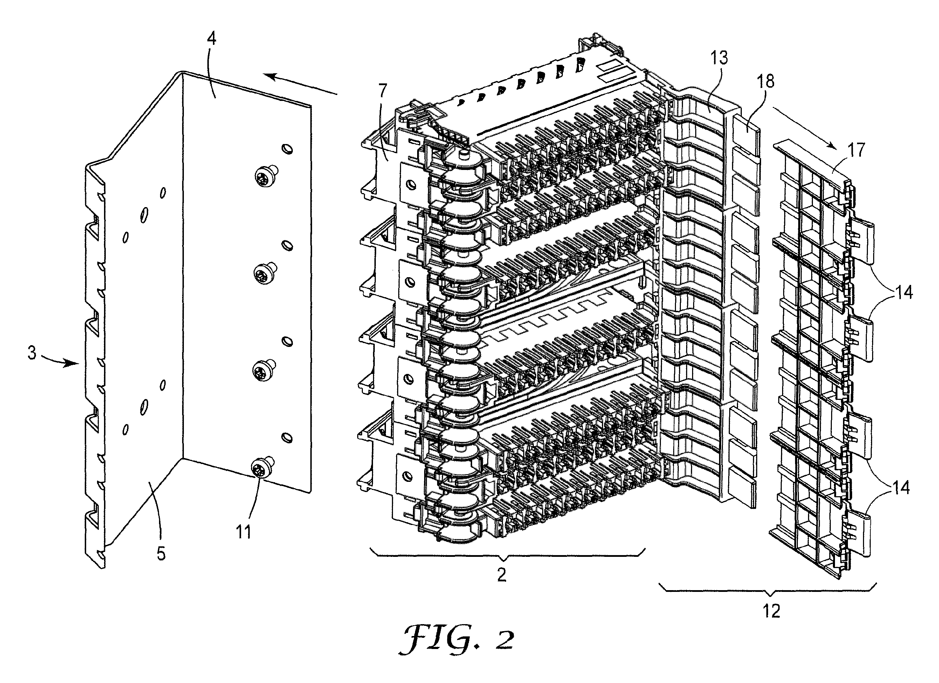

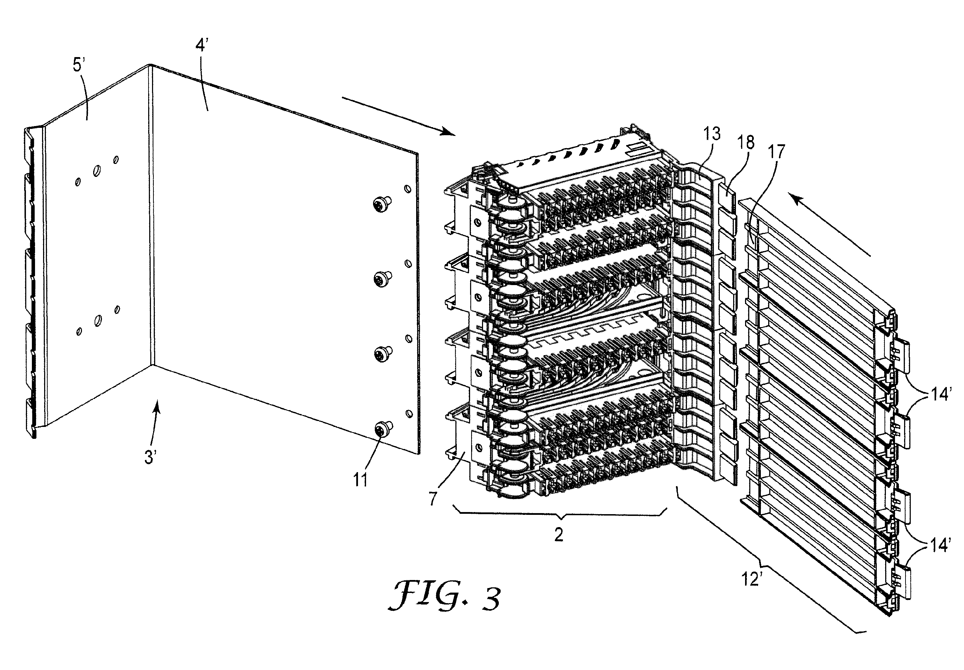

During an upgrade process of the telecommunication assembly 1, e.g. in the event of the installation of new electronic components at the rear side of the termination modules 2, the situation may occur that the new electronic components do not fit in the space 22 between the termination modules 2, the carrier 3 and the extension 12. In such a case the telecommunication assembly 1 according to the invention may be modified in the following manner. As can be seen in Fig. 2 the carrier 3 may be detached from the pivot adapter 7 after swivelling the termination modules 2 in an open position by unscrewing the screws 11. Furthermore the elongation parts 14 of the extensions 12 of the termination modules 2 may also be detached from the adapter part 13 by opening the snap fit connection. That provides the possibility to equip the telecommunication assembly 1 with a new carrier 3' and with new elongation parts 14' with adapted dimensions, e.g. a carrier 3' with a longer leg portion 4' and longer elongation parts 14' (see Fig. 3) without rewiring the telecommunication assembly 1. The new carrier 3' is attached to the pivot adapter 7 by the screws 11 and the elongation parts 14' are attached to the adapter parts 13 by the mating of snap fit elements 17, 18. Accordingly the space surrounded by the new carrier 3', the termination modules 2 and the new extension 12' is larger and therefore new electronic components with bigger dimensions can be inserted into the terminal modules 2. Instead of only replacing a part of the extension 12 it is also possible to replace the whole extension. In such a case the extension can be made out of one piece and the connection between extension 12 and termination module 6 has to be designed detachably.

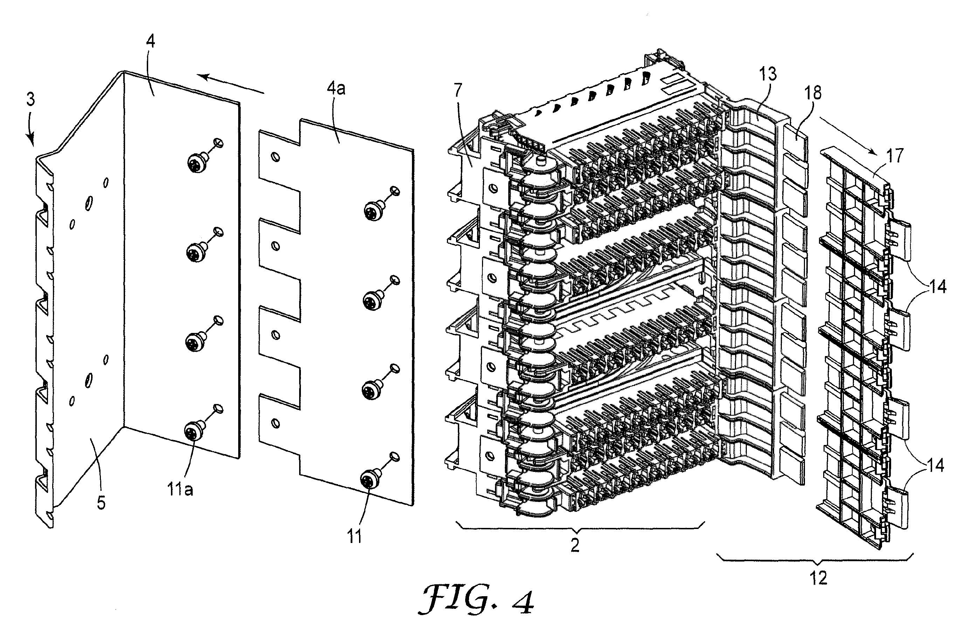

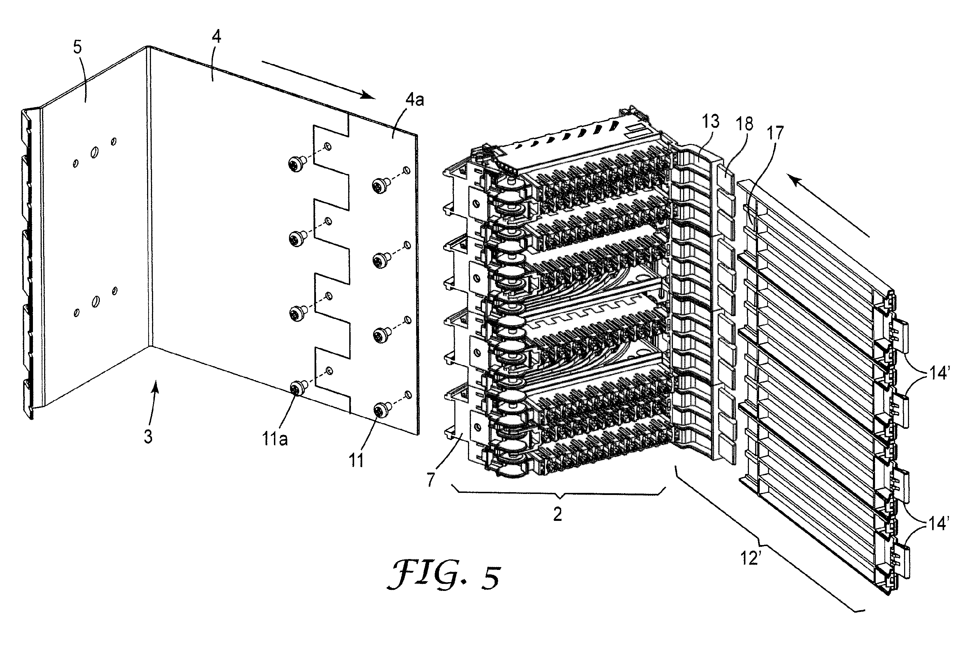

Fig. 4 shows a three dimensional view of the disassembled telecommunication assembly 1 according to the invention in an open position with another embodiment of replacement parts. Instead of replacing the carrier 3 with an upgraded carrier 3' with a longer leg portion 4' it is also possible to attach an adapter 4a to the leg 4 of the carrier 3 with mechanical fasteners such as screws 11 a (Fig. 5), thereby elongating the leg 4 - it has now the length of the original leg 4 plus the length of the adapter 4a. In a second step the pivot adapter 7 is attached to the adapter 4a by screws 11. This embodiment has the advantage that the original carrier 3 may stay fixed to the frame like structure during the upgrade process (not shown in the drawings). Upgrading the extension 12 can be done by the two ways described previously. The first way is that the extension 12 is made out of two parts - an adapter part 13 and an elongation part 14. In the event of an upgrade process the elongation part 14 can be replaced by new elongation part 14'. The second way is that the extension 12 is made out of one piece, which can be replaced by a new extension 12'.

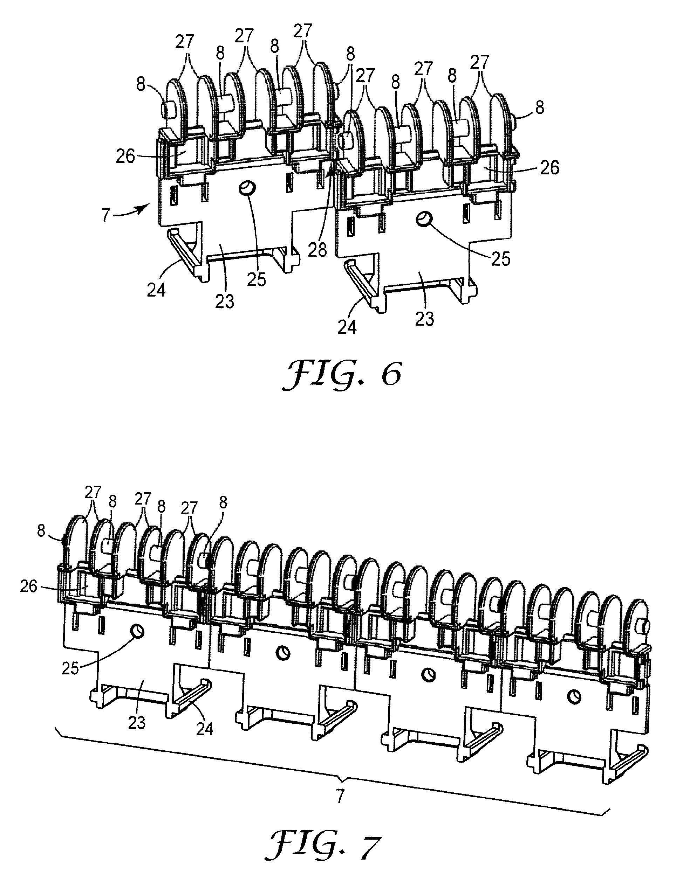

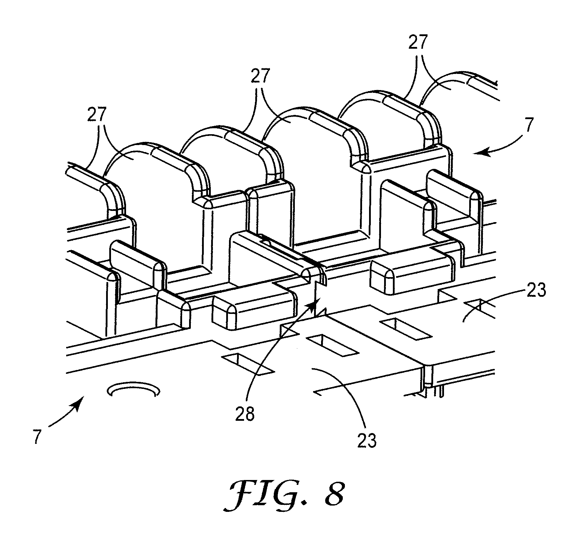

Fig. 6 shows a three dimensional view of two pivot adapters 7 according to the invention. Each termination module 2 with three termination strips 6 is assigned to one pivot adapter 7. The pivot adapters 7 have a rectangular base plate 23. At the lower end of the base plate 23 protrudes a wire guide 24 in the shape of a rectangular loop or eyelet. In the assembled stage of the telecommunication assembly 1, the wire guides 24 are arranged at the outside of the assembly 1 next to the leg portion 4 of the carrier 2 (see Fig. 1). In the middle of the base plate 23 is positioned a threaded bore hole 25 for the screws 11 that fix the pivot adapter 7 with its termination module 2 to the carrier 3. Instead of threaded bore holes 25 a screw nut (not shown) can also be used. In the assembled stage of the telecommunication assembly 1, the screws 11 go through bore holes (not shown) in the leg portion 4 of the carrier 3 into the bore hole 25. At the upper end of the base plate 23 are apertures 26 for wires that need to access the telecommunications assembly 1 from the inside to the outside or vice versa. Above the apertures, the base plate 23 has several parallel bearing plates 27 that extend from the base plate 23. The orientation of the bearing plates 27 is generally perpendicular to the orientation of the base plate 23. Between every second and third, forth and fifth bearing plates 27 a pivot axis 8 is arranged. Half of a pivot axis 8 also extends from the first and the sixth bearing plate 27, in each case to the outside of the pivot adapter 7, thereby providing the possibility of building a complete pivot axis 8 together with the adjacent pivot adapter 7. The side of the base plate 23 of the pivot adapter 7 provides a dovetail structure 28 for attaching several pivot adapters 7 together (see Fig. 7 and 8). To facilitate the replacement of the carrier 3 it is helpful when the termination modules 2 stay together as one part. The pivot adapters 7 that are attached to each other over dovetail structures 28 can be used to create one block out of several termination modules 2, e.g. four modules as shown in Fig. 1. Fig. 8 shows a detailed view of the dovetail structure 28 for attaching pivot adapters 7 at each other.

One advantage of this aspect of the invention is that the wires that are connected to the terminal modules 2 do not need to be detached and afterwards rewired during the above described upgrade process. In contrast, they can stay in contact with the electrical contacts of the termination modules 2 of the telecommunication assembly 1 while the carrier 3 and the elongation parts 14 are being exchanged. Thereby, the service for the customer is not interrupted and can be upheld in a certain amount, such as for example maintaining life line service during the upgrade process. This is possible because all wires are connected to that parts of the assembly 1 that are not going to be exchanged, e.g. the termination modules 2, the pivot adapter 7 and or the adapter part 13 of the extension 12. To fulfil this requirement these parts are specially adapted (see Fig. 8). As described above the pivot adapter 7 has apertures 26 for guiding wires 29 from inside the telecommunication assembly 1 to the outside. Furthermore the pivot adapter 7 has wire guides 24 and means for fixing wire ties 31. Wire guides 24 in the shape of loops or eyelets and means for fixing wire ties 31 are arranged on the outside of the telecommunication assembly 1 thereby providing the possibility of having all wires outside of the telecommunication assembly 1. As can be seen in Fig. 8 all wires that come out of wires guides 32 - the wire guides being arranged parallel to each termination strip 6 - are led into the direction of the pivot adapter 7 and organized by the appropriate means of the pivot adapter 7 such as wire guides 24 and/or wire ties 31.

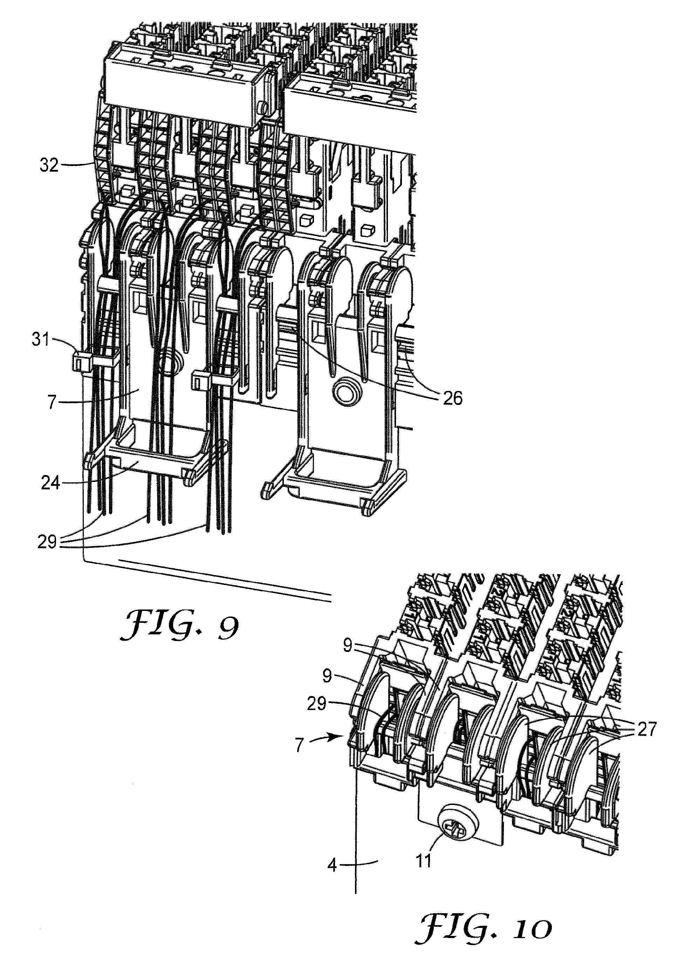

Fig. 9 shows a detailed view of the pivot adapter 7 with a termination module 2 with three termination strips 6 and a part of the leg portion 4 of the carrier 3 of the telecommunication assembly 1 from the inside of the assembly 1. It can be seen that the pivot adapter 7 is fixed to the leg portion 4 by screws 11. It can further be seen that the bearing plates 27 with the pivot axis (not shown in Fig. 9) interact with the hinge structures 9 of the termination module 2. Wires 29 that come out of a wire guide housings 32 are led through the pivot adapter 7 to the outside of the assembly 1. The wires 29 are lead through spaces between the bearing plates 27 of the pivot adapter 7. Therefore all wires are accessible from the outside of the assembly.

### REFERENCE SIGNS LIST

- 1: telecommunication assembly
- 2: termination module
- 3, 3': carrier
- 4, 4': leg portion
- 4a: adapter
- 5, 5': bottom portion
- 6: strip
- 7: pivot adapter
- 8: pivot axis
- 9: hinge structure
- 11: screw
- 11 a: screw
- 12, 12': extension
- 13: adapter part
- 14, 14': elongation part
- 15: projections
- 16: undercut
- 17: opening
- 18: snap arm
- 19: latch hook
- 21: splitter modules
- 22: space
- 23: base plate
- 24: wire guide
- 25: threaded bore hole
- 26: apertures
- 27: baring plates for pivot axis
- 28: dovetail structure
- 29: wires
- 31: wire ties
- 32: wire guide housings

## Claims

1. A telecommunication assembly (1) comprising,
- at least one termination module (2) having contacts for connecting wires and contacts for connecting electronic components,
- a carrier (3) for carrying the termination module, wherein the termination module is pivotally attached to the carrier and can be pivoted from a closed position relative to the carrier into an open position, wherein
- the termination module (2) is attached to the carrier (3) over a pivot adapter (7) and the pivot adapter (7) is detachably attached to the carrier (3)
**characterized in that**
at least two pivot adapters (7) of at least two the termination modules (2) are fixed to each other

2. The telecommunication assembly according to claim 1, with an extension (12) at the termination module that is detachably attached to the carrier in the closed position of the termination module.

3. The telecommunication assembly according to claim 1 or 2, wherein the extension (12) comprises at least two parts.

4. The telecommunication assembly according to any of the preceding claims, wherein the extension (12) comprises an adapter part (13) that is fixed at the termination module (2) and an elongation part (14).

5. The telecommunication assembly according to any of the preceding claims, wherein the adapter part (13) and the elongation part (14) of the extension (12) are detachably connected with each other.

6. The telecommunication assembly according to any of the preceding claims, wherein each termination module (2) comprises a separate pivot adapter (7).

7. The telecommunication assembly according to any of the preceding claims, wherein wire guide means (24, 31) are arranged at the outside of the assembly.

8. The telecommunication assembly according to any of the preceding claims, wherein the wire guide means (24, 31) are fixed at the pivot adapter (7) of the termination module (2).

9. Method for upgrading a telecommunication assembly, the telecommunication assembly comprising:
at least one termination module having contacts for connecting wires and contacts for connecting electrical components,
a carrier for carrying the termination module, wherein the termination module is pivotally attached to the carrier and can be pivoted from a closed position relative to the carrier into an open position, wherein
the termination module is attached to the carrier over a pivot adapter and
the pivot adapter is detachably attached to the carrier
**the method comprises the following steps:**
- detaching the termination module from the carrier,
- replacing the carrier with an upgraded carrier and
- fixing the termination module to the upgraded carrier.

10. The method for upgrading a telecommunication assembly according to claim 9, wherein fixing the upgraded carrier is achieved by fixing an adapter to the carrier, thereby elongating a leg of the carrier, and then fixing the carrier with the adapter to the termination module.

11. The method for upgrading a telecommunication assembly according to claim 9, wherein fixing the upgraded carrier is achieved by fixing a carrier with an elongated leg to the termination module.

12. Method for upgrading a telecommunication assembly, the telecommunication assembly comprising:
at least one termination module having contacts for connecting wires and contacts for connecting electrical components,
a carrier for carrying the termination module, wherein the termination module is pivotally attached to the carrier and can be pivoted from a closed position relative to the carrier into an open position, wherein
the termination module is attached to the carrier over a pivot adapter and
the pivot adapter is detachably attached to the carrier and
an extension at the termination module is detachably attached to the carrier in the closed position,
**the method comprises the following steps:**
- detaching the extension at least partially from the termination module,
- replacing the extension or the part of the extension with an upgraded extension or an upgraded extension part and
- fixing the upgraded extension or the upgraded extension part to the termination module.

13. The method for upgrading a telecommunication assembly according to claim 12, wherein fixing the upgraded extension is achieved by fixing a longer version of the extension.

14. The method for upgrading a telecommunication assembly according to claim 12, wherein fixing the upgraded extension part is achieved by fixing a longer version of the extension part.
